# EUROPEAN PATENT APPLICATION

(11) **EP 4 811 897 A1**
(43) Date of publication of application: **23.09.2026**
(21) Application number: 24890227.2
(22) Date of filing: 13.08.2024
(51) Int. Cl.: H04W 72/044

(54) **TCI STATE INDICATION METHOD, APPARATUS, AND STORAGE MEDIUM**

(30) Priority: 16.11.2023 CN 202311533402
(71) Applicant: Datang Mobile Communications Equipment Co., Ltd., Beijing 100085 (CN)
(72) Inventor: ZUO, Jun, Beijing 100085 (CN); ZHU, Min, Beijing 100085 (CN); GAO, Qiubin, Beijing 100085 (CN)
(74) Representative: Studio Torta S.p.A.
(86) International application number: PCT/CN2024/111889
(87) International publication number: WO 2025/102864

(57) **Abstract**

The present disclosure provides a TCI state indication method, an apparatus, and a storage medium. The method includes: receiving signaling transmitted by a radio access network device, where the signaling is used to indicate multiple groups of TCI states, the number of groups of the multiple groups of TCI states is a first number, one group of TCI states includes at least one TCI state, the first number is used to determine an effective time instant of a TCI state, and a terminal communicates with the radio access network device according to the TCI state at the effective time instant of the TCI state. In this way, multiple groups of TCI states at multiple effective time instants transmitted by the radio access network device are received in a single reception. The present disclosure can reduce overhead of network resources.

## Description

This disclosure claims priority to Chinese Patent Application No. 202311533402.3, filed with the China National Intellectual Property Administration on November 16, 2023 and entitled "TCI STATE INDICATION METHOD, APPARATUS, AND STORAGE MEDIUM", the contents of which are hereby incorporated by reference in their entireties.

### TECHNICAL FIELD

The present disclosure relates to the field of communications and, in particular, to a TCI state indication method, an apparatus, and a storage medium.

### BACKGROUND

In an NR (New Radio, New Radio) system, to combat path loss in a high-frequency scenario, a transmitter and a receiver obtain a matched beam pair through beam management (Beam Management, BM) to improve beamforming gain. In an existing downlink beam management procedure, a radio access network device selects an appropriate Tx beam (transmit beam) for subsequent communication according to beam measurement information reported by a UE (terminal), and indicates selected beam information (spatial reception parameters) to the UE through a transmission configuration indicator (Transmission Configuration Indicator, TCI).

A main drawback of the prior art is that when the radio access network device indicates the beam information to the UE, only a beam for one time instant is indicated each time. When spatial reception parameter information changes, it needs to be re-indicated, resulting in high network resource overhead.

### SUMMARY

The present disclosure provides a TCI state indication method, an apparatus, and a storage medium, which are used to provide a TCI state indication method capable of reducing the overhead of network resources.

In a first aspect, the present disclosure provides a TCI state indication method, applied to a terminal, and including: receiving signaling transmitted by a radio access network device, where the signaling is used to indicate multiple groups of TCI states, the number of groups of the multiple groups of TCI states is a first number, one group of TCI states includes at least one TCI state, the first number is used to determine an effective time instant of a TCI state, and the terminal communicates with the radio access network device according to the TCI state at the effective time instant of the TCI state.

Optionally, the signaling indicates one first TCI code point, and the first TCI code point maps to the multiple groups of TCI states.

Optionally, the signaling indicates multiple second TCI code points, at least one TCI state mapped by each second TCI code point has the same effective time instant, and different second TCI code points correspond to different effective time instants.

Optionally, the signaling is carried in first downlink control information, where the first downlink control information is downlink control information for downlink scheduling.

Optionally, the first downlink control information includes one first TCI field, and the first TCI field indicates the multiple second TCI code points.

Optionally, the first downlink control information includes multiple first TCI fields, and each first TCI field indicates one second TCI code point.

Optionally, the signaling is carried in second downlink control information, where the second downlink control information is downlink control information not used for downlink scheduling.

Optionally, a part of fields in the second downlink control information indicates the multiple second TCI code points.

Optionally, a part of fields in the second downlink control information indicates the number of the second TCI code points.

Optionally, the signaling is carried in third downlink control information, the third downlink control information is downlink control information scrambled by a preset radio network temporary identifier, and the third downlink control information includes: a first field and a second TCI field, where the first field indicates a first number of third TCI code points.

Optionally, one second TCI field is provided, and the second TCI field indicates the third TCI code points of the first number.

Optionally, a second number of second TCI fields is provided, the second number is greater than the first number, the second number is configured by a network side or predefined by a network side and the terminal, the second TCI fields of the first number are determined from the second TCI fields of the second number, and each second TCI field indicates one third TCI code point.

Optionally, after receiving the signaling transmitted by the radio access network device, the method further includes: determining an effective time instant of one group of TCI states; and determining effective time instants of other groups of TCI states according to the effective time instant of the one group of TCI states and an offset duration value, where the offset duration value is configured by a network side or predefined by the network side and the terminal.

Optionally, before receiving the signaling transmitted by the radio access network device, the method further includes: receiving an activation command transmitted by the radio access network device, where the activation command carries at least one second field, and an i-th second field is used to represent the number of effective time instants or the number of groups of TCI states mapped by an i-th TCI code point, where i is a positive integer.

Optionally, the activation command further carries at least one third field, and an i-th third field is used to represent the number of TCI states mapped by an i-th group of TCI states.

In a second aspect, the present disclosure provides a TCI state indication method, applied to a radio access network device, and including: generating signaling; and transmitting the signaling to a terminal, where the signaling is used to indicate multiple groups of TCI states, the number of groups of the multiple groups of TCI states is a first number, one group of TCI states includes at least one TCI state, the first number is used to determine an effective time instant of a TCI state, and the terminal communicates with the radio access network device according to the TCI state at the effective time instant of the TCI state.

Optionally, the signaling indicates one first TCI code point, and the first TCI code point maps to the multiple groups of TCI states.

Optionally, the signaling indicates multiple second TCI code points, at least one TCI state mapped by each second TCI code point has the same effective time instant, and different second TCI code points correspond to different effective time instants.

Optionally, the signaling is carried in first downlink control information, where the first downlink control information is downlink control information for downlink scheduling.

Optionally, the first downlink control information includes one first TCI field, and the first TCI field indicates the multiple second TCI code points.

Optionally, the first downlink control information includes multiple first TCI fields, and each second TCI field indicates one second TCI code point.

Optionally, the signaling is carried in second downlink control information, where the second downlink control information is downlink control information not used for downlink scheduling.

Optionally, a part of fields in the second downlink control information indicates the multiple second TCI code points.

Optionally, a part of fields in the second downlink control information indicates the number of the second TCI code points.

Optionally, the signaling is carried in third downlink control information, the third downlink control information is downlink control information scrambled by a preset radio network temporary identifier, and the third downlink control information includes: a first field and a second TCI field, where the first field indicates a first number of third TCI code points.

Optionally, one second TCI field is provided, and the second TCI field indicates the third TCI code points of the first number.

Optionally, a second number of second TCI fields is provided, the second number is greater than the first number, the second number is configured by a network side or predefined by a network side and the terminal, the second TCI fields of the first number are determined from the second TCI fields of the second number, and each second TCI field indicates one third TCI code point.

Optionally, before transmitting the signaling to the terminal, the method further includes:
transmitting an activation command to the terminal, where the activation command carries at least one second field, and an i-th second field is used to represent the number of effective time instants or the number of groups of TCI states mapped by an i-th TCI code point, where i is a positive integer.

Optionally, the activation command further carries at least one third field, and an i-th third field is used to represent the number of TCI states mapped by an i-th group of TCI states.

In a third aspect, the present disclosure provides a TCI state indication apparatus, applied to a terminal, and including:
a receiving unit, configured to receive signaling transmitted by a radio access network device, where the signaling is used to indicate multiple groups of TCI states, the number of groups of the multiple groups of TCI states is a first number, one group of TCI states includes at least one TCI state, the first number is used to determine an effective time instant of a TCI state, and the terminal communicates with the radio access network device according to the TCI state at the effective time instant of the TCI state.

In a fourth aspect, the present disclosure provides a TCI state indication apparatus, applied to a radio access network device, and including:
a generating unit, configured to generate signaling; and
a transmitting unit, configured to transmit the signaling to a terminal, where the signaling is used to indicate multiple groups of TCI states, the number of groups of the multiple groups of TCI states is a first number, one group of TCI states includes at least one TCI state, the first number is used to determine an effective time instant of a TCI state, and the terminal communicates with the radio access network device according to the TCI state at the effective time instant of the TCI state.

In a fifth aspect, the present disclosure provides a terminal, including: a memory, a transceiver, and a processor:
where the memory is configured to store a computer program;
the transceiver is configured to receive and transmit data under control of the processor;
the processor is configured to read the computer program from the memory and perform the following operation:
   receiving signaling transmitted by a radio access network device, where the signaling is used to indicate multiple groups of TCI states, the number of groups of the multiple groups of TCI states is a first number, one group of TCI states includes at least one TCI state, the first number is used to determine an effective time instant of a TCI state, and the terminal communicates with the radio access network device according to the TCI state at the effective time instant of the TCI state.

In a sixth aspect, the present disclosure provides a radio access network device, including: a memory, a transceiver, and a processor:
where the memory is configured to store a computer program;
the transceiver is configured to receive and transmit data under control of the processor;
the processor is configured to read the computer program from the memory and perform the following operations:
   generating signaling; and
   transmitting the signaling to a terminal, where the signaling is used to indicate multiple groups of TCI states, the number of groups of the multiple groups of TCI states is a first number, one group of TCI states includes at least one TCI state, the first number is used to determine an effective time instant of a TCI state, and the terminal communicates with the radio access network device according to the TCI state at the effective time instant of the TCI state.

In a seventh aspect, the present disclosure provides a processor readable storage medium, where the processor readable storage medium stores a computer program, the computer program is used to cause a processor to execute the TCI state indication method according to any one of the first aspect and the second aspect.

In an eighth aspect, the present disclosure provides a computer program product including instructions therein, when the instructions run on a computer, cause the computer to execute the method according to the first aspect.

According to the TCI state indication method, the apparatus and the storage medium provided by the present disclosure, by receiving signaling transmitted by a radio access network device, where the signaling is used to indicate multiple groups of TCI states, the number of groups of the multiple groups of TCI states is a first number, one group of TCI states includes at least one TCI state, the first number is used to determine an effective time instant of a TCI state, and a terminal communicates with the radio access network device according to the TCI state at the effective time instant of the TCI state, the present disclosure receives multiple groups of TCI states at multiple effective instants transmitted by the radio access network device at once, thereby reducing overhead of network resources.

It should be understood that the content described in the above summary section is not intended to identify key or important features of the embodiments of the present disclosure, nor is it intended to limit the scope of the present disclosure. Other features of the present disclosure will become readily apparent from the following description.

### BRIEF DESCRIPTION OF DRAWINGS

To more clearly illustrate the technical solutions in the embodiments of the present application or the prior art, a brief introduction to the accompanying drawings required for describing the embodiments or the prior art will be provided below. It is evident that the accompanying drawings described below are some embodiments of the present application, and for a person of ordinary skill in the art, other accompanying drawings can be obtained based on these accompanying drawings without creative effort.
FIG. 1 is a schematic diagram of time-domain beam prediction based on AI provided by an embodiment of the present disclosure.
FIG. 2 is a schematic diagram of a TCI state indication method provided by an embodiment of the present disclosure.
FIG. 3 is a schematic diagram of another TCI state indication method provided by an embodiment of the present disclosure.
FIG. 4 is a schematic diagram of a unified TCI state activation command provided by an embodiment of the present disclosure.
FIG. 5 is a schematic diagram of another unified TCI state activation command provided by an embodiment of the present disclosure.
FIG. 6 is a schematic diagram of yet another TCI state indication method provided by an embodiment of the present disclosure.
FIG. 7 is flowchart of a first TCI state indication apparatus provided by an embodiment of the present disclosure.
FIG. 8 is a flowchart of a second TCI state indication apparatus provided by an embodiment of the present disclosure.
FIG. 9 is a schematic diagram of a terminal provided by an embodiment of the present disclosure.
FIG. 10 is a schematic diagram of a radio access network device provided by an embodiment of the present disclosure.

### DESCRIPTION OF EMBODIMENTS

In the present disclosure, "at least one" means one or more, and "multiple" means two or more. "And/or" describes an association relationship of associated objects, represents that there may be three relationships. For example, A and/or B may represent three situations: presence of A only, presence of both A and B, and presence of B only, where A and B may be singular or plural. A character "/" generally represents an "or" relationship between associated objects before and after. "At least one of the following" or similar expressions refers to any combination of these items, including any combination of a single item or multiple items. For example, at least one of a, b, or c may represent: a, b, c, a-b, a-c, b-c, or a-b-c, where a, b, c may be single or multiple.

It can be understood that the steps or operations in the embodiments of the present disclosure are merely examples, and the embodiments of the present disclosure may also perform other operations or variations of various operations. Furthermore, the various steps may be performed in a different order than that presented in the embodiments of the present disclosure, and it may not be necessary to perform all operations in the embodiments of the present disclosure.

The technical solutions in the embodiments of the present disclosure will be described as follows clearly and completely in conjunction with accompanying drawings in the embodiments of the present disclosure. Apparently, the described embodiments are merely a part rather than all of the embodiments of the present disclosure. Based on the embodiments in the present disclosure, all other embodiments obtained by those of ordinary skill in the art without paying creative efforts shall fall within the protection scope of the present disclosure.

The technical solutions provided by the embodiments of the present disclosure can be applied to a variety of systems. For example, an applicable system can be: a global system of mobile communication (global system of mobile communication, GSM) system, a code division multiple access (code division multiple access, CDMA) system, a wideband code division multiple access (Wideband Code Division Multiple Access, WCDMA), a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a long term evolution advanced (long term evolution advanced, LTE-A) system, a universal mobile telecommunication system (universal mobile telecommunication system, UMTS), a worldwide interoperability for microwave access (worldwide interoperability for microwave access, WiMAX) system, a 6G new radio (New Radio, NR) system, etc. These various systems all include terminal devices and network devices. The system may also include a core network component, such as an evolved packet system (evolved packet system, EPS), a 6G system (5GS), etc.

For a clearer understanding of the present solutions, the problems existing in the prior art related to the present solutions will first be briefly described respectively, as follows: Table 1 shows full English names and Chinese definitions corresponding to English abbreviations used herein.

**Table 1**

| English Abbreviation | English Full Name | Chinese Meaning |
|---|---|---|
| NR | New Radio | New Radio |
| TDD | Time Division Duplex | Time Division Duplex |
| FDD | Frequency Division Duplex | Frequency Division Duplex |
| HD-FDD | Half Duplex FDD | Half Duplex FDD |
| gNB | next Generation Node B | next Generation Node B (fifth generation mobile communication system base station) |
| UE | User Equipment | User Equipment/Terminal |
| AI | Artificial Intelligence | Artificial Intelligence |
| ML | Machine Learning | Machine Learning |
| BWP | Bandwidth Part | Bandwidth Part |
| BM | Beam Management | Beam Management |
| SSB | Synchronization Signal Block | Synchronization Signal Block |
| CSI-RS | Channel State Information Reference Signal | Channel State Information Reference Signal |
| PUCCH | Physical Uplink Control Channel | Physical Uplink Control Channel |
| PDCCH | Physical Downlink Control Channel | Physical Downlink Control Channel |
| PUSCH | Physical Uplink Shared Channel | Physical Uplink Shared Channel |
| PDSCH | Physical Downlink Shared Channel | Physical Downlink Shared Channel |
| DCI | Downlink Control Information | Downlink Control Information |
| DL | Downlink | Downlink |
| UCI | Uplink Control Information | Uplink Control Information |
| RRC | Radio Resource Control | Radio Resource Control |
| MAC-CE | Media Access Control-Control Element | Media Access Control-Control Element |
| CSI | Channel State Information | Channel State Information |
| RSRP | Reference Signal Received Power | Reference Signal Received Power |
| L1-RSRP | Layer 1 Reference Signal Received Power | Layer 1 Reference Signal Received Power |
| RSRQ | Reference Signal Received Quality | Reference Signal Received Quality |
| SINR | Signal to Interference and Noise Ratio | Signal to Interference and Noise Ratio |
| ID | Identification | Identification |
| ACK | Acknowledgement | Acknowledgement |
| HARQ-ACK | Hybrid Automatic Repeat Request Acknowledgement | Hybrid Automatic Repeat Request Acknowledgement |
| HARQ-NACK | Hybrid Automatic Repeat Request Negative Acknowledgement | Hybrid Automatic Repeat Request Negative Acknowledgement |
| TCI | Transmission Configuration Indicator | Transmission Configuration Indicator |
| QCL | quasi-colocation | quasi-colocation |
| SUL | Supplementary Uplink | Supplementary Uplink |
| CRC | Cyclic Redundancy Check | Cyclic Redundancy Check |
| CS-RNTI | Configured Scheduling RNTI | Configured Scheduling RNTI |
| RNTI | Radio Network Temporary Indentifier | Radio Network Temporary Identifier |

In the related art, one TCI codepoint can be used to indicate a TCI state for an uplink channel, a TCI state for a downlink channel, or TCI states for both uplink and downlink channels. DCI carrying a TCI field may be DCI that schedules a PDSCH, or it can be PDSCH used only for indicating the TCI state without scheduling a PDSCH. The standard specifies that an effective time instant of the TCI state indicated by the TCI field is at least X symbols after ACK for the PDSCH scheduled by the DCI or ACK for the DCI, where X depends on UE capability.

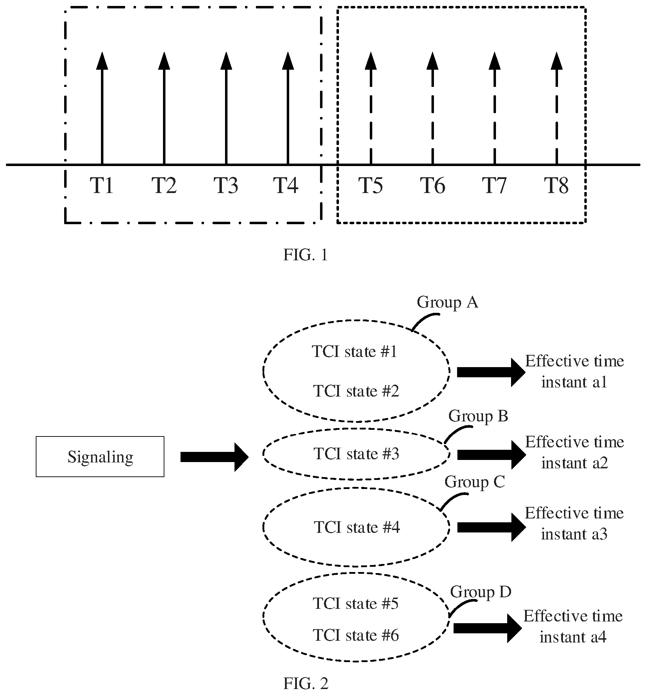

Some methods can be adopted to predict optimal beams for a plurality of future time instants, such as a method based on AI (Artificial Intelligence)/ML (Machine Learning) shown in FIG. 1. In this method, based on beam measurement results at time instants T1, T2, T3, T4, optimal beams at future time instants T5, T6, T7, T8 can be predicted.

In the related art, TCI states indicated by a base station through one TCI indication signaling are for the same time instant, i.e., effective time instants of these TCI states are the same. If optimal beam between the base station and a UE changes frequently, transmission of DCI used only for indicating the TCI state without scheduling a PDSCH will also occur frequently, resulting in high DCI overhead. As shown in FIG. 1, if optimal beams at four time instants T5, T6, T7, and T8 are different, four DCIs need to be transmitted to indicate their TCI states according to the existing mechanism. To reduce DCI overhead, the present invention provides a method that can indicate TCI states for multiple time instants at once, thereby reducing DCI overhead.

To solve the above problem, embodiments of the present disclosure provide a TCI state indication method, an apparatus, and a storage medium. The method includes: receiving signaling transmitted by a radio access network device, where the signaling is used to indicate multiple groups of TCI states, the number of groups of the multiple groups of TCI states is a first number, one group of TCI states includes at least one TCI state, the first number is used to determine an effective time instant of a TCI state, and a terminal communicates with the radio access network device according to the TCI state at the effective time instant of the TCI state.

Exemplarily, referring to FIG. 1, considering flexibility of TCI state indication, in the embodiments of the present disclosure, after the base station indicates TCI states for multiple time instants at once, the base station may update its beam according to network conditions before the indicated TCI states take effect. As shown in FIG. 1, based on a prediction result of an AI model, the base station indicates TCI states for four time instants (T5, T6, T7, T8). The base station transmits TCI indication signaling before T5, where the signaling indicates that effective time instants corresponding to multiple TCI states are T5, T6, T7, T8. Assume that after T5 but before T6, the base station decides to change beams for time instants T6, T7, T8 based on network conditions. Then, the base station transmits TCI indication signaling, where the signaling indicates that the effective time instants corresponding to multiple TCI states are T6, T7, T8, i.e., the beams for these three time instants are updated. In this example, the base station indicates TCI twice. the effective time instants/time instants corresponding to the TCI states indicated in the first indication are four time instants (T5, T6, T7, T8), and the effective time instants/time instants corresponding to the TCI states indicated in the second indication are three time instants (T6, T7, T8). Therefore, when designing the solution, it is necessary to consider a method where the base station indicates TCI states for multiple time instants at once and the number of time instants indicated at once is variable (non-fixed).

Here, the method and the apparatus are based on the same application concept. Since the method and the apparatus have similar principles for solving problems, the implementation of the apparatus and the method can be referred to each other, and the repetition will not be repeated.

A first TCI state indication method provided in the embodiments of the present disclosure is applied to a terminal. The TCI state indication method includes: receiving signaling transmitted by a radio access network device, where the signaling is used to indicate multiple groups of TCI states, the number of groups of the multiple groups of TCI states is a first number, one group of TCI states includes at least one TCI state, the first number is used to determine an effective time instant of a TCI state, and the terminal communicates with the radio access network device according to the TCI state at the effective time instant of the TCI state.

The UE receives signaling transmitted by the base station, where the signaling indicates the multiple groups of TCI states, and the number of groups of the multiple groups of TCI states is the first number (n), where n is an integer from 1 to N, and N is an integer configured or predefined by a network side. The first number is also the effective time instants of the multiple groups of TCI states. For example, when predicting beams based on an AI algorithm, if output of the AI model is optimal beams at four time instants, the base station side can configure N=4, and n takes an integer value from 1 to 4.

Referring to FIG. 2, if n is 4, the signaling indicates four groups of TCI states, namely group A, group B, group C, and group D. Group A of TCI states includes TCI state #1 and TCI state #2. Group B of TCI states includes TCI state #3. Group C of TCI states includes TCI state #4. Group D of TCI states includes TCI state #5 and TCI state #6. An effective time instant corresponding to the group A of TCI states is an effective time instant a1, i.e., an effective time instant of TCI state #1 and TCI state #2 is a1. An effective time instant corresponding to the group B of TCI states is an effective time instant a2, i.e., an effective time instant of TCI state #3 is a2. An effective instant corresponding to the group C of TCI states is an effective time instant a3, i.e., an effective time instant of TCI state #4 is a3. An effective time instant corresponding to the group D of TCI states is an effective time instant a4, i.e., an effective time instant of TCI state #5 and TCI state #6 is a4.

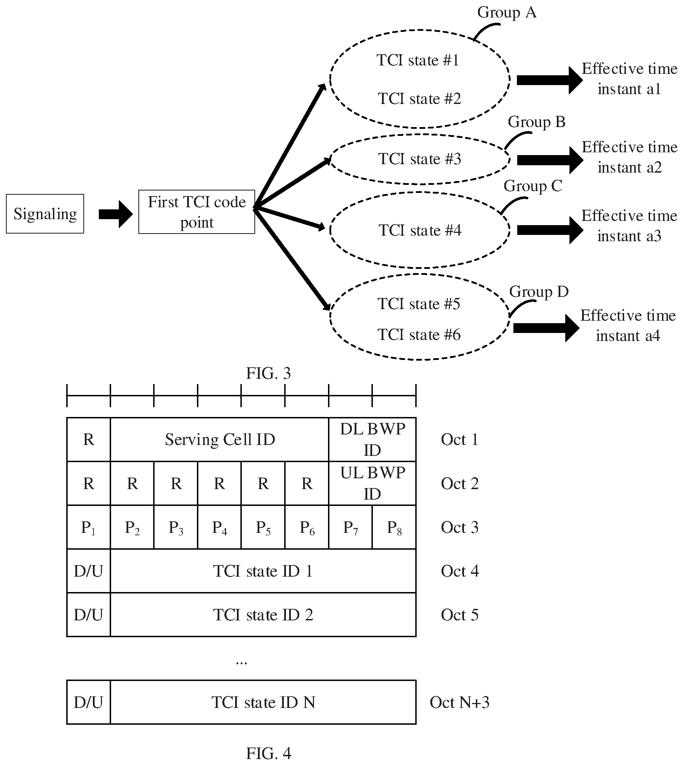

In an optional embodiment, referring to FIG. 3, the signaling indicates one first TCI code point, and the first TCI code point maps to multiple groups of TCI states. The signaling received by the UE indicates one first TCI code point (e.g., the first TCI code point in FIG. 3), and effective time instants of the multiple groups of TCI states mapped by the one first TCI code point are n time instants.

Furthermore, before receiving signaling transmitted by the radio access network device, the method further includes: receiving an activation command transmitted by the radio access network device, where the activation command carries at least one second field, where the i-th second field is used to represent the number of effective time instants or the number of groups of TCI states mapped by an i-th TCI code point, and i is a positive integer.

Specifically, the base station activates TCI states and transmits the activation command to the terminal, where the activation command indicates the number of effective time instants of TCI states mapped by each TCI code point, and an effective time instant of each TCI state is determined according to a predetermined rule.

The activation command further carries at least one third field, where an i-th third field is used to indicate the number of TCI states mapped by an i-th group of TCI states.

Specifically, the number of effective time instants corresponding to the multiple groups of TCI states mapped by each TCI code point is indicated in the activation command for TCI state. For example, a second field is added to the activation command, e.g., the second field is named "Ti field", and the second field is used to indicate the number of effective time instants corresponding to TCI states of the i-th TCI code point. A length of the second field is $\left⌈{log}_{2} N\right⌉$*.* After receiving the signaling indicating the TCI states, the UE recognizes that the first TCI code point is indicated, and recognizes, from the activation command, multiple groups of TCI states mapped by the first TCI code point and the number of effective time instants corresponding to these groups of TCI states.

If the number of effective time instants corresponding to the first TCI code point is greater than 1, it is considered that the first TCI code point includes multiple groups of TCI states, and each group of TCI states has the same effective time instant. For example, if the number of effective time instants corresponding to the TCI code point is n, the first TCI code point maps to n groups of TCI states. Each group of TCI states includes one or more TCI states, and the number of TCI states included in each group is determined according to the third field in the activation command. the effective time instant of each group of TCI states is determined according to the following principles.

An effective time instant of a first group of TCI states of each TCI code point may follow the existing definition of a unified effective time instant of a TCI beam, and a time offset value between effective time instants of remaining groups of TCI states and an effective time instant of a previous group may be predefined or indicated by the base station. For example, if the offset value of the effective time instant is configured to be 500 ms, an effective time instant of the n-th group of TCI states is t0 +500×(n-1) (ms), where t0 is the effective time instant of the first group of TCI states.

In an existing unified (unified) TCI indication method, a number of TCI states are configured by RRC, and MAC-CE signaling activates a part of TCI states to form TCI code points. The number of activated TCI code points is S, where S ranges from 1 to 8. When the number S of the activated TCI code points is greater than 1, one code point is selected from the S activated code points via DCI signaling. The MAC-CE signaling for activating/deactivating TCI states is shown in FIG. 4.

In existing MAC-CE signaling, Serving cell ID, DL BWP ID, and UL BWP ID are respectively used to indicate a serving cell index, a downlink part bandwidth index, and an uplink part bandwidth index to which the activated TCI states are applied; Pi field is used to represent that the i-th TCI code point includes one or two TCI states; D/U represents whether a TCI state ID in the same byte as D/U is a joint/downlink TCI state or an uplink TCI state; the TCI state ID is a TCI state index; and R is a reserved bit.

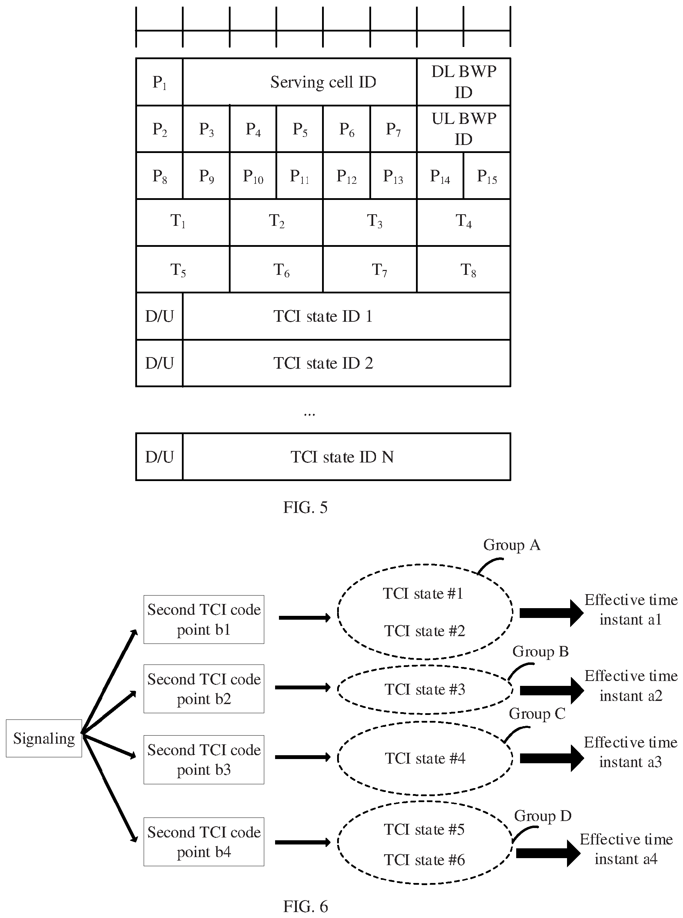

Furthermore, in the embodiments of the present disclosure, the second field is added to the activation command of TCI states, and the second field is used to represent the number of effective time instants included in the i-th TCI code point. Assuming that the maximum number of effective time instants included in each TCI code point is 4, 2 bits are used to represent the number of effective time instants (the first number) or the number of groups of TCI states included in the i-th TCI code point. Assuming that 8 TCI code points are activated, the activation command is shown in FIG. 5.

When Ti = 00, it represents that the number of effective time instants (the number of groups of TCI states) of the TCI states included in the i-th TCI code point is 1;
when Ti = 01, it represents that the number of effective time instants (the number of groups of TCI states) of the TCI states included in the i-th TCI code point is 2;
when Ti = 10, it represents that the number of effective time instants (the number of groups of TCI states) of the TCI states included in the i-th TCI code point is 3;
when Ti = 11, it represents that the number of effective time instants (the number of groups of TCI states) of the TCI states included in the i-th TCI code point is 4;
in the above, i = 1, 2, ..., 8.

The third field is used to represent how many TCI states are included in the i-th group of TCI states (e.g., one or two). Each TCI code point may include multiple groups of TCI states. In the present embodiment, the 8 TCI code points include a total of 15 groups of TCI states.

The UE receives the MAC-CE activation command and the DCI signaling carrying a TCI field. The TCI field of the DCI indicates code point 001, i.e., the 2nd TCI code point. Assume that T2 = 10, that is, the number of effective time instants of TCI states included in the 2nd TCI code point is 3, i.e., three groups of TCI states are included. The three groups of TCI states are respectively:
group 1: TCI state #16 (downlink TCI state);
group 2: TCI state #12 (uplink TCI);
group 3: TCI state #9 (downlink TCI state) and TCI state #20 (uplink TCI state).

Furthermore, the UE reads TCI state IDs corresponding to the 2nd TCI code point, and determines the number of TCI states included in each group of TCI states in the 2nd TCI code point according to the third field (Pi field). An effective time instant of a first group of TCI states is the same as that in the existing mechanism, i.e., X symbols after reception of an ACK. If an offset value of effective time instants configured by the base station is 500 ms, an effective time instant of a second group of TCI states is 500 ms after the effective time instant of the first group of TCI states, and an effective time instant of a third group of TCI states is 500 ms after the effective time instant of the second group of TCI states. The UE receives a downlink channel/signal and transmits an uplink channel/signal according to the effective time instant of each group of TCI states.

In another optional embodiment, referring to FIG. 6, the signaling indicates multiple second TCI code points, where at least one TCI state mapped by each second TCI code point has the same effective time instant, and different second TCI code points correspond to different effective time instants.

In the embodiments of the present disclosure, the indication signaling received by the UE includes multiple TCI code points. TCI states mapped by one TCI code point have the same effective time instant, and TCI states mapped by different TCI code points have different effective time instants. There is an offset value between effective time instants of TCI states of different code points. Specifically, the signaling is carried in first downlink control information, where the first downlink control information is downlink control information for downlink scheduling, i.e., the signaling may be carried in DCI for scheduling a PDSCH. The first downlink control information includes one first TCI field, and the first TCI field indicates the multiple second TCI code points. The first downlink control information includes multiple first TCI fields, and each first TCI field indicates one second TCI code point.

Optionally, the signaling is carried in second downlink control information, where the second downlink control information is downlink control information not used for downlink scheduling, i.e., carried in DCI that does not schedule a PDSCH. A part of fields in the second downlink control information indicates the multiple second TCI code points. A part of fields in the second downlink control information indicates the number of the second TCI code points.

In the embodiments of the present disclosure, the part of fields indicating the multiple second TCI code points and the part of fields indicating the number of the second TCI code points are different fields. Specifically, the signaling received by the UE includes n TCI code points. TCI states mapped by one TCI code point have the same effective time instant, and TCI states mapped by different code points have different effective time instants. The second downlink control information indicates the number of TCI code points and the TCI code points. When the number of the second TCI code points indicated by the second downlink control information is 1, the first TCI field in the second downlink control information indicates this second TCI code point. When the number of the second TCI code points indicated by the second downlink control information is greater than 1, the first TCI field in the second downlink control information indicates one second TCI code point, and remaining second TCI code points are indicated by reserved (reserved) fields in the second downlink control information.

Specifically, when the second downlink control information does not schedule a PDSCH and is only used to indicate TCI state, the DCI (downlink control information) is designed according to the following rules:
1) CRC (cyclic redundancy check) of the second downlink control information is scrambled by CS-RNTI;
2) whether the second downlink control information is only used to indicate TCI state is determined according to values of special fields (such as existing RV/MCS/NDI/FDRA field, which are the part of fields described above);
3) the number of TCI code points indicated by the current second downlink control information is determined according to a value of an SRS request field (part of fields);
4) corresponding parts of fields are read according to Table 2 (for values and corresponding functions of parts of fields in DCI) to obtain multiple TCI code points.

**Table 2**

| Value of parts of fields in I | The number of indicated TCI code points | Fields used to indicate n TCI code points |
|---|---|---|
| RV/MCS/NDI/FDRA fields take values consistent with the existing design, and SRS request field = 00 (SUL not configured) or 000 (SUL configured) | 1 TCI code point | Code point corresponding to the TCI field (3 bits) |
| RV/MCS/NDI/FDRA fields take values consistent with the existing design, and SRS request field = 01 (SUL not configured) or 001 (SUL configured) | 2 TCI code points | The TCI field (3 bits) + HARQ process number field (4 bits) are concatenated in sequence, and correspond to the first code point and the second code point sequentially from least significant bit (LSB) to most significant bit (MSB) (3 bits per code point, redundant bits are reserved) |
| RV/MCS/NDI/FDRA fields take values consistent with the existing design, and SRS request field = 10 (SUL not configured) or 010 (SUL configured) | 3 TCI code points | The TCI field (3 bits) + HARQ process number field (4 bits) + Antenna port field (4/5/6 bits) are concatenated in sequence, and correspond to the first code point, second code point and third code point sequentially from LSB to MSB (3 bits per code point, redundant bits are reserved) |
| RV/MCS/NDI/FDRA fields take values consistent with the existing design, and SRS request field = 11 (SUL not configured) or 011 (SUL configured) | 4 TCI code points | The TCI field + HARQ process number field + Antenna port field + DMRS sequence initialization field (1 bit) are concatenated in sequence, and correspond to the first code point, second code point, third code point and forth code point sequentially from LSB to MSB (3 bits per code point, redundant bits are reserved) |

Table 2 only provides one method for concatenating multiple fields in DCI and reading bits as TCI code points, and other reading methods are not excluded, such as reading multiple fields from MSB to LSB, which is not limited herein.

An effective time instant of TCI states of the first TCI code point may follow the existing definition of the effective time instant of the unified TCI beam described above. A time offset between the effective time instants of TCI states of other TCI code points and that of a previous TCI code point may be predefined or indicated by the base station.

In the embodiments of the present disclosure, a manner in which the base station configures several TCI states through RRC signaling and then activates a part of the TCI states to form TCI code points through MAC-CE signaling is the same as the method in the existing protocol.

The base station transmits DCI (the second downlink control information) that does not schedule a PDSCH and is only used for TCI indication. After receiving the DCI, the UE determines the function of the current DCI and the number of indicated TCI code points according to values of parts of fields, and reads corresponding TCI code points. Assuming that SUL is not configured, values of following fields in the CS-RNTI scrambled DCI received by the UE are:
RV field: all bits set to "1";
MCS field: all bits set to "1";
NDI field: set to "0";
FDRA field: all bits set to "0" (FDRA type is Type 0);
SRS request field: "01".

As shown in Table 1, the UE recognizes from the values of the RV, MCS, NDI, and FDRA fields that the DCI does not schedule a PDSCH and is only used for TCI indication. According to SRS request field = "01", the UE recognizes that the DCI indicates 2 TCI code points. The UE needs to read the TCI field (3 bits) and the HARQ process number field (4 bits). Assuming that each TCI code point is 3 bits, the concatenation of the TCI field and the HARQ process number field is 7 bits. The UE reads 6 bits from LSB to MSB as the first TCI code point and the second TCI code point, and a redundant bit is a reserved bit.

After the UE reads the first TCI code point and the second TCI code point, an effective time instant of TCI states corresponding to the first TCI code point is the same as that in the existing mechanism, i.e., X symbols after reception of an ACK. If an offset value of effective time instants configured by the base station is 500 ms, an effective time instant of TCI states corresponding to the second TCI code point is 500 ms after the effective time instant of TCI states corresponding to the first TCI code point. The UE receives a downlink channel/signal and transmits an uplink channel/signal according to the effective time instant of TCI states corresponding to each TCI code point.

In another optional embodiment, the signaling is carried in third downlink control information, the third downlink control information is downlink control information scrambled by a preset radio network temporary identifier. The third downlink control information includes: a first field and a second TCI field, where the first field indicates a first number of third TCI code points.

One second TCI field is provided, and the second TCI field indicates the third TCI code points of the first number.

Furthermore, a second number of second TCI fields is provided, the second number is greater than the first number, the second number is configured by a network side or predefined by a network side and the terminal, the second TCI fields of the first number are determined from the second TCI fields of the second number, and each second TCI field indicates one third TCI code point.

In the embodiments of the present disclosure, a new type of RNTI (the preset radio network temporary identifier) is introduced, and DCI (third downlink control information) scrambled by this type of RNTI is dedicated to indicate TCI code point. When the UE parses the DCI scrambled by this type of RNTI, it may recognize that the DCI is used to indicate the third TCI code point. The DCI scrambled by this type of RNTI includes at least the first field and the second TCI field, where the first field indicates the number of third TCI code points indicated by the third downlink control information. The number of the second TCI field is 1 or N. When one second TCI field is provided, the one second TCI field may indicate N third TCI code points; when N second TCI fields are provided, each second TCI field indicates one third TCI code point, and N third TCI code points may be indicated in total. The second TCI field is read according to a value of the first field. An offset value exists between effective time instants of TCI states of different code points.

After receiving the signaling transmitted by the radio access network device, the method further includes: determining an effective time instant of one group of TCI states; and determining effective time instants of other groups of TCI states according to the effective time instant of the one group of TCI states and an offset duration value, where the offset duration value is configured by a network side or predefined by the network side and the terminal.

Specifically, the signaling in the third downlink control information received by the UE includes the first field (used to indicate the number of TCI code points included in the DCI) and the second TCI field (used to indicate TCI code points). The third downlink control information may be scrambled by using the preset RNTI. When the preset RNTI is used for scrambling, it indicates that the third downlink control information is only used to indicate TCI.

Specifically, N (N is the second number) second TCI fields may be provided, and the UE reads n (n is the first number) fields therefrom, where n is the number of TCI code points indicated by the first field, and N is the maximum value of the number of TCI code points indicated by the first field. When n is less than N, redundant fields are reserved.

Alternatively, one second TCI field is provided, and a bit length of the second TCI field is N*L, where bits of length n*L are used to indicate n TCI code points, n is the number of TCI code points indicated by a TCI_Num field, L is the number of bits per TCI code point, and N is the maximum number of TCI code points indicated by the TCI_Num field. When n is less than N, redundant bits are reserved.

An effective time instant of TCI states of a first third TCI code point may follow the existing definition of the effective time instant of a unified TCI beam. A time offset between effective time instant of TCI states of other third TCI code points and that of a previous third TCI code point may be predefined or indicated by the base station. In the embodiments of the present disclosure, a manner in which the base station configures several TCI states through RRC signaling and then activates a part of the TCI states to form TCI code points through MAC-CE signaling is the same as the method in the existing protocol.

Assume that the maximum number of TCI code points indicated by the base station at once via the third downlink control information is configured to 4. Then, during each TCI indication, the base station may indicate 1 to 4 TCI code points. The value of the first filed and the corresponding number of indicated TCI code points are shown in Table 3.

**Table 3**

| Value of the first field | The number of indicated third TCI code points |
|---|---|
| 00 | 1 third TCI code point |
| 01 | 2 third TCI code points |
| 10 | 3 third TCI code points |
| 11 | 4 third TCI code points |

A length of the second TCI field is 12 bits, indicating up to 4 third TCI code points, with each third TCI code point occupying 3 bits. When the number n of third TCI code points indicated by the base station is less than 4, n*3 bits of the second TCI field from LSB to MSB sequentially indicate the 1st third TCI code point, the 2nd third TCI code point, ..., the nth third TCI code point.

The CRC check bits of the third downlink control information transmitted by the base station are scrambled by TCI-RNTI (preset radio network temporary identifier) of the UE. The TCI-RNTI of the UE is configured by the base station.

After receiving the third downlink control information, if the UE parses the command using the TCI-RNTI, it recognizes that the third downlink control information is used to indicate third TCI code points or TCI states. The UE reads the first field, and the value of the first field is "10", indicating that the base station has indicated 3 third TCI code points. The UE reads 9 bits of the second TCI field from LSB to MSB, and every 3 bits form a group, respectively indicating the 1st third TCI code point, the 2nd third TCI code point, and the 3rd third TCI code point.

After the UE reads3 third TCI code points, an effective time instant of TCI states corresponding to the 1st third TCI code point is the same as that in the existing mechanism, i.e., X symbols after reception of an ACK. If an offset value of effective time instants configured by the base station is 500 ms, an effective time instant of TCI states corresponding to the 2nd third TCI code point is 500 ms after the effective time instant of TCI states corresponding to the 1st third TCI code point, and an effective time instant of TCI states corresponding to the 3rd third TCI code point is 500 ms after the effective time instant of TCI states corresponding to the 2nd third TCI code point. The UE receives a downlink channel/signal and transmits an uplink channel/signal according to the effective time instant of TCI states corresponding to each third TCI code point.

The embodiments of the present disclosure propose a method for indicating TCI states of multiple effective time instants at once, where the number of time instants of the indicated TCI states is non-fixed, which can reduce signaling overhead caused by frequent TCI state indication. The present disclosure considers multiple indication methods. The first method is to indicate one TCI code point at once, and the number of effective time instants of TCI states mapped by the one TCI code point is n. The second method is to indicate the number of TCI code points and the TCI code points using a part of fields in DCI. The third method is to add a first field in DCI and read the TCI code points according to the newly added first field. The first method is flexible in indication, it can be used when indicating TCI using MAC-CE or DCI, and does not require changes to DCI design. Compared with the first method, the second method can indicate more TCI states under the same indication overhead without adding new DCI bits. Although the third method occupies more DCI overhead, it is not limited by the DCI format and can indicate a larger number of TCI states.

Furthermore, the present disclosure provides a TCI state indication method applied to a radio access network device. The TCI state indication method includes: generating signaling; and transmitting the signaling to a terminal, where the signaling is used to indicate multiple groups of TCI states, the number of groups of the multiple groups of TCI states is a first number, one group of TCI states includes at least one TCI state, the first number is used to determine an effective time instant of a TCI state, and the terminal communicates with the radio access network device according to the TCI state at the effective time instant of the TCI state.

For a specific implementation process of this embodiment, reference is made to the above embodiments, and details are not repeated herein.

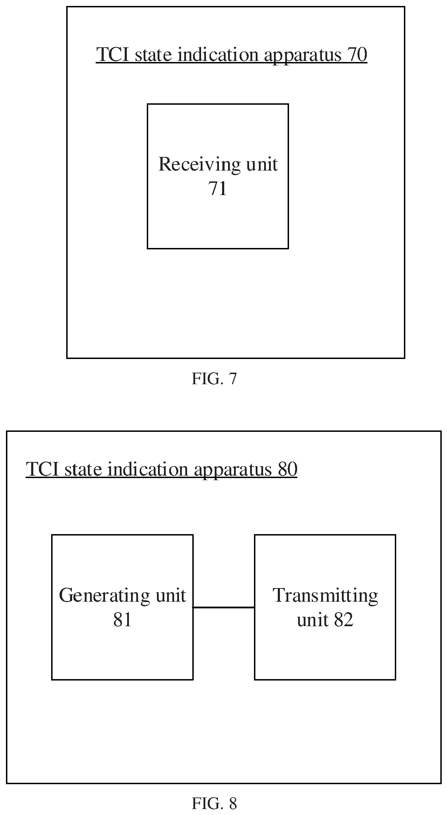

In addition, the embodiments of the present disclosure provide a TCI state indication apparatus 70. Referring to FIG. 7, the TCI state indication apparatus 70 is applied to a terminal, and includes:
a receiving unit 71, configured to receive signaling transmitted by a radio access network device, where the signaling is used to indicate multiple groups of TCI states, the number of groups of the multiple groups of TCI states is a first number, one group of TCI states includes at least one TCI state, the first number is used to determine an effective time instant of a TCI state, and the terminal communicates with the radio access network device according to the TCI state at the effective time instant of the TCI state.

Optionally, the signaling indicates one first TCI code point, and the first TCI code point maps to the multiple groups of TCI states.

Optionally, the signaling indicates multiple second TCI code points, at least one TCI state mapped by each second TCI code point has the same effective time instant, and different second TCI code points correspond to different effective time instants.

Optionally, the signaling is carried in first downlink control information, where the first downlink control information is downlink control information for downlink scheduling.

Optionally, the first downlink control information includes one first TCI field, and the first TCI field indicates the multiple second TCI code points.

Optionally, the first downlink control information includes multiple first TCI fields, and each first TCI field indicates one second TCI code point.

Optionally, the signaling is carried in second downlink control information, where the second downlink control information is downlink control information not used for downlink scheduling.

Optionally, a part of fields in the second downlink control information indicates the multiple second TCI code points.

Optionally, a part of fields in the second downlink control information indicates the number of the second TCI code points.

Optionally, the signaling is carried in third downlink control information, the third downlink control information is downlink control information scrambled by a preset radio network temporary identifier, and the third downlink control information includes: a first field and a second TCI field, where the first field indicates a first number of third TCI code points.

Optionally, one second TCI field is provided, and the second TCI field indicates the third TCI code points of the first number.

Optionally, a second number of second TCI fields is provided, the second number is greater than the first number, the second number is configured by a network side or predefined by a network side and the terminal, the second TCI fields of the first number are determined from the second TCI fields of the second number, and each second TCI field indicates one third TCI code point.

Optionally, the apparatus further includes a determining unit (not shown), configured to determine an effective time instant of one group of TCI states after receiving the signaling transmitted by the radio access network device; and determine effective time instants of other groups of TCI states according to the effective time instant of the one group of TCI states and an offset duration value, where the offset duration value is configured by a network side or predefined by the network side and the terminal.

Optionally, the apparatus further includes a receiving unit (not shown), configured to: before receiving the signaling transmitted by the radio access network device, receive an activation command transmitted by the radio access network device, where the activation command carries at least one second field, and an i-th second field is used to represent the number of effective time instants or the number of groups of TCI states mapped by an i-th TCI code point, where i is a positive integer.

Optionally, the activation command further carries at least one third field, and an i-th third field is used to represent the number of TCI states mapped by an i-th group of TCI states.

Referring to FIG. 8, the present disclosure provides a TCI state indication apparatus 80 applied to a radio access network device. The TCI state indication apparatus 80 includes:
a generating unit 81, configured to generate signaling; and
a transmitting unit 82, configured to transmit the signaling to a terminal, where the signaling is used to indicate multiple groups of TCI states, the number of groups of the multiple groups of TCI states is a first number, one group of TCI states includes at least one TCI state, the first number is used to determine an effective time instant of a TCI state, and the terminal communicates with the radio access network device according to the TCI state at the effective time instant of the TCI state.

Optionally, the signaling indicates one first TCI code point, and the first TCI code point maps to the multiple groups of TCI states.

Optionally, the signaling indicates multiple second TCI code points, at least one TCI state mapped by each second TCI code point has the same effective time instant, and different second TCI code points correspond to different effective time instants.

Optionally, the signaling is carried in first downlink control information, where the first downlink control information is downlink control information for downlink scheduling.

Optionally, the first downlink control information includes one first TCI field, and the first TCI field indicates the multiple second TCI code points.

Optionally, the first downlink control information includes multiple first TCI fields, and each second TCI field indicates one second TCI code point.

Optionally, the signaling is carried in second downlink control information, where the second downlink control information is downlink control information not used for downlink scheduling.

Optionally, a part of fields in the second downlink control information indicates the multiple second TCI code points.

Optionally, a part of fields in the second downlink control information indicates the number of the second TCI code points.

Optionally, the signaling is carried in third downlink control information, the third downlink control information is downlink control information scrambled by a preset radio network temporary identifier, and the third downlink control information includes: a first field and a second TCI field, where the first field indicates a first number of third TCI code points.

Optionally, one second TCI field is provided, and the second TCI field indicates the third TCI code points of the first number.

Optionally, a second number of second TCI fields is provided, the second number is greater than the first number, the second number is configured by a network side or predefined by a network side and the terminal, the second TCI fields of the first number are determined from the second TCI fields of the second number, and each second TCI field indicates one third TCI code point.

Optionally, the transmitting unit is further configured to, before transmitting the signaling to the terminal, transmit an activation command to the terminal, where the activation command carries at least one second field, and an i-th second field is used to represent the number of effective time instants or the number of groups of TCI states mapped by an i-th TCI code point, where i is a positive integer.

Optionally, the activation command further carries at least one third field, and an i-th third field is used to represent the number of TCI states mapped by an i-th group of TCI states.

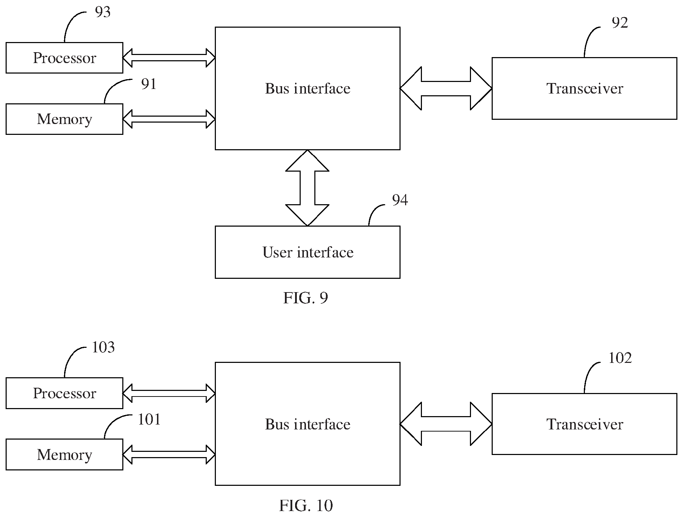

Referring to FIG. 9, the present disclosure provides a terminal, including: a memory 91, a transceiver 92 and a processor 93:
where the memory 91 is configured to store a computer program;
the transceiver 92 is configured to receive and transmit data under control of the processor;
the processor 93 is configured to read the computer program in the memory and perform the following operations:
   receiving signaling transmitted by a radio access network device, where the signaling is used to indicate multiple groups of TCI states, the number of groups of the multiple groups of TCI states is a first number, one group of TCI states includes at least one TCI state, the first number is used to determine an effective time instant of a TCI state, and the terminal communicates with the radio access network device according to the TCI state at the effective time instant of the TCI state.

In FIG. 9, the bus architecture may include any number of interconnected buses and bridges, and specifically links various circuits of one or more processors represented by the processor 93 and a memory represented by the memory 91 together. The bus architecture may also link various other circuits such as peripheral devices, voltage regulators and power management circuits, which are well known in the art, and thus no further description is provided herein. A bus interface provides an interface. The transceiver 92 may be a plurality of elements, i.e., includes a transmitter and a receiver, and provides a unit for communicating with various other apparatuses over transmission media including wireless channels, wired channels, optical cables and the like. Optionally, a measurement processing apparatus may further include a user interface 94. For different user devices, the user interface 94 may also be an interface capable of being externally or internally connected to required devices including, but not limited to, a keypad, a display, a loudspeaker, a microphone, a joystick and the like.

The processor 93 is responsible for managing the bus architecture and general processing, and the memory 91 may store data used by the processor 93 when performing operations.

Optionally, the processor 93 may be a central processing unit (central processing unit, CPU), an application specific integrated circuit (application specific integrated circuit, ASIC), a field-programmable gate array (field-programmable gate array, FPGA) or a complex programmable logic device (complex programmable logic device, CPLD), and the processor 93 may also adopt a multi-core architecture.

The processor 93 is configured to execute any method related to the terminal provided by the embodiment of the present disclosure according to the obtained executable instructions by invoking the computer program stored in the memory 91. The processor and the memory may also be physically arranged separately.

Referring to FIG. 10, the present disclosure provides a radio access network device including a memory 101, a transceiver 102 and a processor 103:
where the memory 101 is configured to store a computer program;
the transceiver 102 is configured to receive and transmit data under control of the processor 103;
the processor 103 is configured to read the computer program in the memory 101 and perform the following operations:
   generating signaling; and transmitting the signaling to a terminal, where the signaling is used to indicate multiple groups of TCI states, the number of groups of the multiple groups of TCI states is a first number, one group of TCI states includes at least one TCI state, the first number is used to determine an effective time instant of a TCI state, and the terminal communicates with the radio access network device according to the TCI state at the effective time instant of the TCI state.

In FIG. 10, the bus architecture may include any number of interconnected buses and bridges, and specifically links various circuits of one or more processors represented by the processor 103 and a memory represented by the memory 101 together. The bus architecture may also link various other circuits such as peripheral devices, voltage regulators and power management circuits, which are well known in the art, and thus no further description is provided herein. A bus interface provides an interface. The transceiver 102 may be a plurality of elements, i.e., includes a transmitter and a receiver, and provides a unit for communicating with various other apparatuses over transmission media including wireless channels, wired channels, optical cables and the like. The processor 103 is responsible for managing the bus architecture and general processing, and the memory 101 may store data used by the processor 103 when performing operations.

The processor 103 may be a CPU, an ASIC, an FPGA or a CPLD, and the processor may also adopt a multi-core architecture.

The processor 103 is configured to execute any method related to the radio access network device provided by the embodiment of the present disclosure according to the obtained executable instructions by invoking the computer program stored in the memory 101. The processor and the memory may also be physically arranged separately.

It should be noted herein that the apparatus provided by the present disclosure can implement all method steps implemented in the foregoing method embodiments and achieve the same technical effects, and repeated parts and beneficial effects in the present embodiment that are the same as those in the method embodiments are not described in detail herein.

It should be noted that the division of units in the embodiments of the present disclosure is schematic and is merely logical function division, and another division manner may be adopted in actual implementation. In addition, each functional unit in each embodiment of the present disclosure may be integrated into one processing unit, or each unit may exist alone physically, or two or more units may be integrated into one unit. The integrated unit may be implemented in a form of hardware or a form of a software functional unit.

When the integrated unit is implemented in a form of a software functional unit and sold or used as an independent product, it may be stored in a processor-readable storage medium. Based on such understanding, the technical solutions of the present disclosure, essentially, or the part thereof contributing to the prior art, or all or part of the technical solutions may be embodied in a form of a software product. The computer software product is stored in a storage medium and includes several instructions for causing a computer device (which may be a personal computer, a server, a network device or the like) or a processor (processor) to perform all or part of the steps of the methods in various embodiments of the present disclosure. The foregoing storage medium includes: various media that can store program codes, such as a U disk, a removable hard disk, a read-only memory (Read-Only Memory, ROM), a random access memory (Random Access Memory, RAM), a magnetic disk or an optical disk.

The embodiments of the present disclosure provide a processor-readable storage medium. The processor-readable storage medium stores a computer program, where the computer program is used for causing a processor to execute any method related to the terminal provided by the embodiment of the present disclosure, so that the processor can implement all method steps implemented by the terminal in the foregoing method embodiments and achieve the same technical effects, and repeated parts and beneficial effects in the present embodiment that are the same as those in the method embodiments are not described in detail herein.

The processor-readable storage medium may be any available medium or data storage device that can be accessed by a processor, including but not limited to a magnetic memory (e.g., a floppy disk, a hard disk, a magnetic tape, a magneto-optical (MO) and the like), an optical memory (e.g., a CD, a DVD, a BD, an HVD and the like), and a semiconductor memory (e.g., a ROM, an EPROM, an EEPROM, a NAND FLASH (non-volatile memory), a Solid State Drive (SSD) and the like).

It may be understood by those skilled in the art that the embodiments of the present disclosure may be provided as a method, a system or a computer program product. Therefore, the present disclosure may adopt a form of an entirely hardware embodiment, an entirely software embodiment or an embodiment combining software and hardware aspects. Furthermore, the present disclosure may adopt a form of a computer program product implemented on one or more computer-usable storage media (including but not limited to a magnetic memory, an optical memory and the like) having computer-usable program codes embodied thereon.

The present disclosure is described with reference to flowcharts and/or block diagrams of the method, the apparatus and the computer program product according to the embodiments of the present disclosure. It should be understood that each flow and/or block in the flowcharts and/or block diagrams, and combinations of flows and/or blocks in the flowcharts and/or block diagrams may be implemented by computer-executable instructions. These computer-executable instructions may be provided to a processor of a general-purpose computer, a special-purpose computer, an embedded processor or other programmable data processing apparatuses to produce a machine, so that the instructions executed by the processor of the computer or other programmable data processing apparatuses create an apparatus for implementing the functions specified in one or more flows in the flowcharts and/or one or more blocks in the block diagrams.

These computer-executable instructions may also be stored in a processor-readable memory that can guide a computer or other programmable data processing apparatuses to work in a specific manner, so that the instructions stored in the processor-readable memory create a manufacture including an instruction apparatus, and the instruction apparatus implements the functions specified in one or more flows in the flowcharts and/or one or more blocks in the block diagrams.

These computer-executable instructions may also be loaded onto a computer or other programmable data processing apparatuses, so that a series of operation steps are performed on the computer or other programmable apparatuses to produce computer-implemented processing, and therefore the instructions executed on the computer or other programmable apparatuses provide steps for implementing the functions specified in one or more flows in the flowcharts and/or one or more blocks in the block diagrams.

Obviously, various modifications and variations can be made by those skilled in the art to the present disclosure without departing from the spirit and scope of the present disclosure. Thus, if these modifications and variations of the present disclosure fall within the scope of the claims of the present disclosure and equivalent technologies thereof, the present disclosure is also intended to include these modifications and variations.

## Claims

1. A TCI state indication method, **characterized by** being applied to a terminal, and comprising:
receiving signaling transmitted by a radio access network device, wherein the signaling is used to indicate multiple groups of TCI states, the number of groups of the multiple groups of TCI states is a first number, one group of TCI states comprises at least one TCI state, the first number is used to determine an effective time instant of a TCI state, and the terminal communicates with the radio access network device according to the TCI state at the effective time instant of the TCI state.

2. The TCI state indication method according to claim 1, wherein the signaling indicates one first TCI code point, and the first TCI code point maps to the multiple groups of TCI states.

3. The TCI state indication method according to claim 1, wherein the signaling indicates multiple second TCI code points, at least one TCI state mapped by each second TCI code point has the same effective time instant, and different second TCI code points correspond to different effective time instants.

4. The TCI state indication method according to claim 3, wherein the signaling is carried in first downlink control information, wherein the first downlink control information is downlink control information for downlink scheduling.

5. The TCI state indication method according to claim 4, wherein the first downlink control information comprises one first TCI field, and the first TCI field indicates the multiple second TCI code points.

6. The TCI state indication method according to claim 4, wherein the first downlink control information comprises multiple first TCI fields, and each first TCI field indicates one second TCI code point.

7. The TCI state indication method according to claim 3, wherein the signaling is carried in second downlink control information, wherein the second downlink control information is downlink control information not used for downlink scheduling.

8. The TCI state indication method according to claim 7, wherein a part of fields in the second downlink control information indicates the multiple second TCI code points.

9. The TCI state indication method according to claim 7, wherein a part of fields in the second downlink control information indicates the number of the second TCI code points.

10. The TCI state indication method according to claim 1, wherein the signaling is carried in third downlink control information, the third downlink control information is downlink control information scrambled by a preset radio network temporary identifier, and the third downlink control information comprises: a first field and a second TCI field, wherein the first field indicates a first number of third TCI code points.

11. The TCI state indication method according to claim 10, wherein one second TCI field is provided, and the second TCI field indicates the third TCI code points of the first number.

12. The TCI state indication method according to claim 10, wherein a second number of second TCI fields is provided, the second number is greater than the first number, the second number is configured by a network side or predefined by a network side and the terminal, the second TCI fields of the first number are determined from the second TCI fields of the second number, and each second TCI field indicates one third TCI code point.

13. The TCI state indication method according to any one of claims 1 to 12, after receiving the signaling transmitted by the radio access network device, further comprising:
determining an effective time instant of one group of TCI states; and
determining effective time instants of other groups of TCI states according to the effective time instant of the one group of TCI states and an offset duration value, wherein the offset duration value is configured by a network side or predefined by the network side and the terminal.

14. The TCI state indication method according to claim 2, before receiving the signaling transmitted by the radio access network device, further comprising:
receiving an activation command transmitted by the radio access network device, wherein the activation command carries at least one second field, and an i-th second field is used to represent the number of effective time instants or the number of groups of TCI states mapped by an i-th TCI code point, wherein i is a positive integer.

15. The TCI state indication method according to claim 14, wherein the activation command further carries at least one third field, and an i-th third field is used to represent the number of TCI states mapped by an i-th group of TCI states.

16. A TCI state indication method, **characterized by** being applied to a radio access network device, and comprising:
generating signaling; and
transmitting the signaling to a terminal, wherein the signaling is used to indicate multiple groups of TCI states, the number of groups of the multiple groups of TCI states is a first number, one group of TCI states comprises at least one TCI state, the first number is used to determine an effective time instant of a TCI state, and the terminal communicates with the radio access network device according to the TCI state at the effective time instant of the TCI state.

17. The TCI state indication method according to claim 16, wherein the signaling indicates one first TCI code point, and the first TCI code point maps to the multiple groups of TCI states.

18. The TCI state indication method according to claim 16, wherein the signaling indicates multiple second TCI code points, at least one TCI state mapped by each second TCI code point has the same effective time instant, and different second TCI code points correspond to different effective time instants.

19. The TCI state indication method according to claim 18, wherein the signaling is carried in first downlink control information, wherein the first downlink control information is downlink control information for downlink scheduling.

20. The TCI state indication method according to claim 19, wherein the first downlink control information comprises one first TCI field, and the first TCI field indicates the multiple second TCI code points.

21. The TCI state indication method according to claim 19, wherein the first downlink control information comprises multiple first TCI fields, and each second TCI field indicates one second TCI code point.

22. The TCI state indication method according to claim 18, wherein the signaling is carried in second downlink control information, wherein the second downlink control information is downlink control information not used for downlink scheduling.

23. The TCI state indication method according to claim 22, wherein a part of fields in the second downlink control information indicates the multiple second TCI code points.

24. The TCI state indication method according to claim 22, wherein a part of fields in the second downlink control information indicates the number of the second TCI code points.

25. The TCI state indication method according to claim 16, wherein the signaling is carried in third downlink control information, the third downlink control information is downlink control information scrambled by a preset radio network temporary identifier, and the third downlink control information comprises: a first field and a second TCI field, wherein the first field indicates a first number of third TCI code points.

26. The TCI state indication method according to claim 25, wherein one second TCI field is provided, and the second TCI field indicates the third TCI code points of the first number.

27. The TCI state indication method according to claim 26, wherein a second number of second TCI fields is provided, the second number is greater than the first number, the second number is configured by a network side or predefined by a network side and the terminal, the second TCI fields of the first number are determined from the second TCI fields of the second number, and each second TCI field indicates one third TCI code point.

28. The TCI state indication method according to claim 17, before transmitting the signaling to the terminal, further comprising:
transmitting an activation command to the terminal, wherein the activation command carries at least one second field, and an i-th second field is used to represent the number of effective time instants or the number of groups of TCI states mapped by an i-th TCI code point, wherein i is a positive integer.

29. The TCI state indication method according to claim 28, wherein the activation command further carries at least one third field, and an i-th third field is used to represent the number of TCI states mapped by an i-th group of TCI states.

30. A TCI state indication apparatus, **characterized by** being applied to a terminal, and comprising:
a receiving unit, configured to receive signaling transmitted by a radio access network device, wherein the signaling is used to indicate multiple groups of TCI states, the number of groups of the multiple groups of TCI states is a first number, one group of TCI states comprises at least one TCI state, the first number is used to determine an effective time instant of a TCI state, and the terminal communicates with the radio access network device according to the TCI state at the effective time instant of the TCI state.

31. The TCI state indication apparatus according to claim 30, wherein the signaling indicates one first TCI code point, and the first TCI code point maps to the multiple groups of TCI states.

32. The TCI state indication apparatus according to claim 30, wherein the signaling indicates multiple second TCI code points, at least one TCI state mapped by each second TCI code point has the same effective time instant, and different second TCI code points correspond to different effective time instants.

33. The TCI state apparatus according to claim 32, wherein the signaling is carried in first downlink control information, wherein the first downlink control information is downlink control information for downlink scheduling.

34. The TCI state indication apparatus according to claim 33, wherein the first downlink control information comprises one first TCI field, and the first TCI field indicates the multiple second TCI code points.

35. The TCI state indication apparatus according to claim 33, wherein the first downlink control information comprises multiple first TCI fields, and each first TCI field indicates one second TCI code point.

36. The TCI state indication apparatus according to claim 32, wherein the signaling is carried in second downlink control information, wherein the second downlink control information is downlink control information not used for downlink scheduling.

37. The TCI state indication apparatus according to claim 36, wherein a part of fields in the second downlink control information indicates the multiple second TCI code points.

38. The TCI state indication apparatus according to claim 36, wherein a part of fields in the second downlink control information indicates the number of the second TCI code points.

39. The TCI state indication apparatus according to claim 30, wherein the signaling is carried in third downlink control information, the third downlink control information is downlink control information scrambled by a preset radio network temporary identifier, and the third downlink control information comprises: a first field and a second TCI field, wherein the first field indicates a first number of third TCI code points.

40. The TCI state indication apparatus according to claim 39, wherein one second TCI field is provided, and the second TCI field indicates the third TCI code points of the first number.

41. The TCI state indication apparatus according to claim 39, wherein a second number of second TCI fields is provided, the second number is greater than the first number, the second number is configured by a network side or predefined by a network side and the terminal, the second TCI fields of the first number are determined from the second TCI fields of the second number, and each second TCI field indicates one third TCI code point.

42. The TCI state indication apparatus according to any one of claims 30 to 39, further comprising: a determining unit, configured to determine an effective time instant of one group of TCI states after receiving the signaling transmitted by the radio access network device; and determine effective time instants of other groups of TCI states according to the effective time instant of the one group of TCI states and an offset duration value, wherein the offset duration value is configured by a network side or predefined by the network side and the terminal.

43. The TCI state indication apparatus according to claim 31, wherein the receiving unit is further configured to, before receiving the signaling transmitted by the radio access network device, receive an activation command transmitted by the radio access network device, wherein the activation command carries at least one second field, and an i-th second field is used to represent the number of effective time instants or the number of groups of TCI states mapped by an i-th TCI code point, wherein i is a positive integer.

44. The TCI state indication apparatus according to claim 43, wherein the activation command further carries at least one third field, and an i-th third field is used to represent the number of TCI states mapped by an i-th group of TCI states.

45. A TCI state indication apparatus, **characterized by** being applied to a radio access network device, and comprising:
a generating unit, configured to generate signaling; and
a transmitting unit, configured to transmit the signaling to a terminal, wherein the signaling is used to indicate multiple groups of TCI states, the number of groups of the multiple groups of TCI states is a first number, one group of TCI states comprises at least one TCI state, the first number is used to determine an effective time instant of a TCI state, and the terminal communicates with the radio access network device according to the TCI state at the effective time instant of the TCI state.

46. The TCI state indication apparatus according to claim 45, wherein the signaling indicates one first TCI code point, and the first TCI code point maps to the multiple groups of TCI states.

47. The TCI state indication apparatus according to claim 45, wherein the signaling indicates multiple second TCI code points, at least one TCI state mapped by each second TCI code point has the same effective time instant, and different second TCI code points correspond to different effective time instants.

48. The TCI state indication apparatus according to claim 47, wherein the signaling is carried in first downlink control information, wherein the first downlink control information is downlink control information for downlink scheduling.

49. The TCI state indication apparatus according to claim 48, wherein the first downlink control information comprises one first TCI field, and the first TCI field indicates the multiple second TCI code points.

50. The TCI state indication apparatus according to claim 48, wherein the first downlink control information comprises multiple first TCI fields, and each second TCI field indicates one second TCI code point.

51. The TCI state indication apparatus according to claim 47, wherein the signaling is carried in second downlink control information, wherein the second downlink control information is downlink control information not used for downlink scheduling.

52. The TCI state indication apparatus according to claim 51, wherein a part of fields in the second downlink control information indicates the multiple second TCI code points.

53. The TCI state indication apparatus according to claim 51, wherein a part of fields in the second downlink control information indicates the number of the second TCI code points.

54. The TCI state indication apparatus according to claim 45, wherein the signaling is carried in third downlink control information, the third downlink control information is downlink control information scrambled by a preset radio network temporary identifier, and the third downlink control information comprises: a first field and a second TCI field, wherein the first field indicates a first number of third TCI code points.

55. The TCI state indication apparatus according to claim 45, wherein one second TCI field is provided, and the second TCI field indicates the third TCI code points of the first number.

56. The TCI state indication apparatus according to claim 45, wherein a second number of second TCI fields is provided, the second number is greater than the first number, the second number is configured by a network side or predefined by a network side and the terminal, the second TCI fields of the first number are determined from the second TCI fields of the second number, and each second TCI field indicates one third TCI code point.

57. The TCI state indication apparatus according to claim 46, wherein the transmitting unit is further configured to, before transmitting the signaling to the terminal, transmit an activation command to the terminal, wherein the activation command carries at least one second field, and an i-th second field is used to represent the number of effective time instants or the number of groups of TCI states mapped by an i-th TCI code point, wherein i is a positive integer.

58. The TCI state indication apparatus according to claim 57, wherein the activation command further carries at least one third field, and an i-th third field is used to represent the number of TCI states mapped by an i-th group of TCI states.

59. A terminal, **characterized by** comprising: a memory, a transceiver, and a processor:
wherein the memory is configured to store a computer program;
the transceiver is configured to receive and transmit data under control of the processor;
the processor is configured to read the computer program from the memory and perform the following operation:
receiving signaling transmitted by a radio access network device, wherein the signaling is used to indicate multiple groups of TCI states, the number of groups of the multiple groups of TCI states is a first number, one group of TCI states comprises at least one TCI state, the first number is used to determine an effective time instant of a TCI state, and the terminal communicates with the radio access network device according to the TCI state at the effective time instant of the TCI state.

60. A radio access network device, **characterized by** comprising: a memory, a transceiver, and a processor:
wherein the memory is configured to store a computer program;
the transceiver is configured to receive and transmit data under control of the processor;
the processor is configured to read the computer program from the memory and perform the following operations:
generating signaling; and
transmitting the signaling to a terminal, wherein the signaling is used to indicate multiple groups of TCI states, the number of groups of the multiple groups of TCI states is a first number, one group of TCI states comprises at least one TCI state, the first number is used to determine an effective time instant of a TCI state, and the terminal communicates with the radio access network device according to the TCI state at the effective time instant of the TCI state.

61. A processor readable storage medium, **characterized in that** the processor readable storage medium stores a computer program, and the computer program is used to cause a processor to execute the TCI state indication method according to any one of claims 1 to 29.
